# EUROPÄISCHE PATENTSCHRIFT

(11) **EP 1 127 364 B1**
(45) Veröffentlichungstag und Bekanntmachung des Hinweises auf die Patenterteilung: **12.06.2002**
(21) Anmeldenummer: 99971577.4
(22) Anmeldetag: 02.11.1999
(51) Int. Cl.: H01H 19/02

(54) **DREHKNEBEL ZUR BETÄTIGUNG DES STELLTRIEBES EINES POTENTIOMETERS**
TURNING KNOB FOR ACTUATING THE ADJUSTING MEMBER OF A POTENTIOMETER
BOUTON TOURNANT POUR L'ACTIONNEMENT DE L'ORGANE DE REGLAGE D'UN POTENTIOMETRE

(30) Priorität: 03.11.1998 DE 19850681
(43) Veröffentlichungstag der Anmeldung: 29.08.2001
(73) Patentinhaber: BSH Bosch und Siemens Hausgeräte GmbH, 81669 München (DE)
(72) Erfinder: STROHM, Klaus, D-89568 Hermaringen (DE); JOKSCH, Harald, D-89269 Vöhringen (DE); KORDON, Michael, D-89547 Dettingen (DE); STRAUSS, Georg, D-89537 Giengen (DE)
(86) Internationale Anmeldenummer: EP9908362
(87) Internationale Veröffentlichungsnummer: WO0026930

(56) Entgegenhaltungen:
- WO-A-93/08581
- US-A- 4 523 174

## Beschreibung

Die Erfindung betrifft einen Drehknebel zur Betätigung des Stelltriebes eines Potentiometers oder dergleichen mit wenigstens einem in radialem Abstand zur Drehachse des Drehknebels an einer seiner Sichtflächen austretendem Beleuchtungsmittel.

Bei bekannten, elektronisch geregelten Kältegeräten mit von Hand vornehmbarer Temperatureinstellung kommen zu diesem Zweck Drehknebel zum Einsatz, welche beispielsweise hinter einer Verblendung, wie einer Vorsatzblende angeordnet und für eine mögliche Bedienung zugänglich sind. Zur Einstellung der Temperatur ist der Drehknebel mit dem Stelltrieb eines auf einer Leiterplatte sitzenden Potentiometers verbunden. Die momentan mittels des Drehknebels eingestellte Temperatur wird durch eine an dessen als Sichtfläche dienenden Frontseite austretende Leuchtdiode kenntlich gemacht, welche zugleich durch eine bestimmte Blinkfrequenz anzeigt, daß die eingestellte Temperatur von der momentan tatsächlich im Kühlraum des Kältegerätes vorherrschenden Temperatur abweicht. Zur Bestromung der Leuchtdiode sind an diese von der Elektronik ausgehende kunsstoffummantelte Drähte vorgesehen, welche hinsichtlich ihrer Länge so bemessen sein müssen, daß sie die zur Einstellung der gerätespezifischen Temperaturbereiche notwendige Verdrehbewegung des Drehknebels nicht behindern. Gleichzeitig muß sichergestellt sein, daß die von der Verdrehung des Drehknebeis herrührenden wechselnden Belastungen auf die Verdrahtung nicht im Laufe der Zeit zu Kontaktschwierigkeiten oder gar zum Brechen der Drähte führen. Um diese Voraussetzungen über die Brauchbarkeitsdauer des Kältegerätes erfüllen zu können, sind arbeits- und zeitintensive und somit letztendlich kostenträchtige Arbeitsabläufe innerhalb des Fertigungsprozesses des Kältegerätes notwendig. Hinzu kommt die diesem Lösungsprinzip, nämlich die Verdrahtung der Leuchtdiode mit der Elektronik, innewohnende Montageproblematik.

Der Erfindung liegt die Aufgabe zugrunde, einen Drehknebel gemäß dem Oberbegriff des Anspruches 1 (siehe US-A-4 523 174) mit einfachen konstruktiven Maßnahmen dahingehend zu ertüchtigen, daß nicht nur die Nachteile des Standes der Technik vermieden sind, sondern zugleich eine robuste und zuverlässige Lösung bereitgestellt ist.

Diese Aufgabe wird gemäß der Erfindung dadurch gelöst, daß der Lichtleiter an seinem die Lichteintrittsfläche aufweisenden Endabschnitt Mitnahmemittel zur Betätigung des Stelltriebes des Potentiometers besitzt.

Durch die erfindungsgemäße Lösung ist die Möglichkeit geschaffen, die Lichtquelle, beispielsweise in Form einer Leuchtdiode, ortsfest beispielsweise auf der Steuerelektronik anzuordnen, wodurch eine äußerst dauerhafte und durch den Entfall der elektrischen Verdrahtung samt ihrer Steckverbindungen doch sehr kostengünstige Lösung geschaffen ist, deren Fehlermöglichkeiten bzw. Fehlerhäufigkeiten durch den Wegfall der Verdrahtung und somit durch den Entfall der Einflußnahme auf diese durch das Verdrehen des Verdrehknebels wesentlich herabgesetzt ist. Ferner besteht die Möglichkeit, beispielsweise durch die Einfärbung des Lichtleiters, dem austretenden Licht, je nach Funktion der Anzeige eine unterschiedliche Farbgebung zu verleihen. Außerdem ist durch die Teilereduzierung die Logistik im Fertigungsablauf deutlich günstiger.

Gemäß einer bevorzugten Ausführungsform des Gegenstandes der Erfindung ist vorgesehen, daß am Drehknebel Aufnahmen vorgesehen sind, in welchen der Lichtleiter lösbar form- und/oder kraftschlüssig gehalten ist.

Hierdurch ist der Lichtleiter auf einfache Weise besonders kostengünstig und positionsgenau in seiner vorbestimmten Position dauerhaft festsetzbar, wobei zugleich die Möglichkeit geschaffen ist, den Lichtleiter im Schadensfall mit wenigen Handgriffen austauschen zu können.

Gemäß einer weiteren bevorzugten Ausführungsform des Gegenstandes der Erfindung ist vorgesehen, daß die Aufnahmen einerseits durch einen an den Sichtflächen vorgesehenen Durchbruch für das freie Ende des Lichtleiters und andererseits durch eine zumindest im Nahbereich der Drehachse des Drehknebels sitzende Rastaufnahme gebildet sind.

Eine solche Befestigung des Lichtleiters innerhalb des Drehknebels stellt sicher, daß ersterer an seinen wesentlichen Funktionsabschnitten, nämlich an seiner Lichteintritts- bzw. seiner Lichtaustrittsfläche positionsgenau gehalten ist und somit der Lichtleiter bezüglich des Drehknebels eine für das funktionsgemäße Zusammenwirken der beiden Bauteile stets reproduzierbare Positionierung erfährt.

Besonders rasch und mit geringem Kraftaufwand ist der Lichtleiter am Drehknebel befestigbar, wenn nach einer nächsten vorteilhaften Ausgestaltung des Gegenstandes der Erfindung vorgesehen ist, daß die Rastaufnahme durch zwei im Abstand zueinander angeordnete, den Lichtleiter zwischen sich aufnehmende Halteelemente gebildet ist, welche Ω-förmig ausgeführte Rastmittel aufweisen, in welche senkrecht zur Drehachse des Drehknebels am Lichtleiter vorgesehene Rastzapfen einzurasten vermögen. Durch die seitlich am Lichtleiter angreifenden Halteelemente ist zugleich eine gewisse Führung und Seitenstabilität des Lichtleiters bezüglich des Drehknebels erreicht.

Besonders gezielt barrierefrei herbeiführbar ist die Befestigung des Lichtleiters an den Aufnahmen des Drehknebels, wenn nach einer weiteren bevorzugten Ausführungsform des Gegenstandes der Erfindung vorgesehen ist, daß die Ω-ähnlich ausgeführten Rastmittel entgegen der Fügerichtung des freien Endes des Lichtleiters in den Drehbruch mit einer Zuführöffnung versehen sind.

Besonders einfachen, beispielsweise aus Kunststoff-Spritzguß oder aber aus tiefgezogenem metallischen Werkstoff herstellbar ist ein Drehknebel, wenn nach einer nächsten vorteilhaften Weiterbildung des Gegenstandes der Erfindung vorgesehen ist, daß der Drehknebel in Art eines Napfes ausgebildet ist, dessen Napfboden als Frontseite des Drehknebels dient und konzentrisch um die Drehachsen des Drehknebels die Austrittsöffnung für die Lichtaustrittsfläche des Lichtleiters aufweist.

Entsprechend einer weiteren bevorzugten Ausführungsform des Gegenstandes der Erfindung ist vorgesehen, daß der Lichtleiter zumindest weitestgehend vom Napfraum des Napfes aufgenommen ist, wobei das der Napföffnung zugewandte freie Ende des Lichtleiters einen Überstand bezüglich der Napföffnung aufweist und mit Mitnahmemittel zur Betätigung des Stelltriebes des Potentiometers ausgestattet ist.

Durch eine derartige Anordnung des Lichtleiters bezüglich des Drehknebels ist der erstere nicht nur weitestgehend vor ungewollten Beschädigungen geschützt, sondern zugleich zwischen dem Lichtleiter und dem Drehknebel eine positionsgenaue Einheit geschaffen, welche zur Betätigung des Potentiometers dient.

Eine besonders einfache und rasch durchführbare sowie positionsstabile Befestigung des Lichtleiters innerhalb des Napfraumes ergibt sich insbesondere im Hinblick auf die am Napfboden vorgesehene Austrittsöffnung für die Lichtaustrittsfläche des Lichtleiters, wenn gemäß einer nächsten vorteilhaften Ausführungsform des Gegenstandes der Erfindung vorgesehen ist, daß der Napf im Nahbereich seiner Napföffnung mit dem die Rastzapfen des Lichtleiters aufnehmenden Rastmitteln ausgestattet ist, dessen Zuführöffnung randoffen zur Napföffnung hin ausgebildet sind, wobei die Rastzapfen am Lichtleiter im Nahbereich seiner Mitnahmemittel angeordnet sind. Durch die Zuordnung der Rastzapfen am Lichtleiter im Nahbereich seiner Mitnahmemittel ist eine besonders günstige, von der Betätigung des Potentiometers herrührende Kräfteeinleitung des Lichtleiters auf den Drehknebel geschaffen.

Besonders einfach, robust und dennoch paßgenau herstellbar sind die Mitnahmemittel zur Betätigung des Potentiometers, wenn nach einer nächsten bevorzugten Ausführungsform des Gegenstandes der Erfindung vorgesehen ist, daß die Mitnahmemittel zur Betätigung des Potentiometers als parallel einander gegenüberliegende Eingriffsflächen ausgebildet sind, welche form- und/oder kraftschlüssig in eine Aufnahmeöffnung des Stelltriebes des Potentiometers einzugreifen vermögen.

Besonders preisgünstig und platzsparend ausgebildet ist eine Lichtquelle, wenn nach einer letzten bevorzugten Ausführungsform des Gegenstandes der Erfindung vorgesehen ist, daß die Lichtquelle als Leuchtdiode ausgebildet ist.

Die Erfindung ist in der nachfolgenden Beschreibung an Hand eines in der beigefügten Zeichnung vereinfacht dargestellten Ausführungsbeispieles erläutert.

Es zeigen:
- Fig. 1: einen napfähnlich ausgeführten Drehknebel, mit einem in dessen Napfraum eingesetzten Lichtleiter, in Ansicht von der Öffnungsseite des Napfraumes her,
- Fig. 2: den Drehknebel mit dem darin eingesetzten Lichtleiter, in Schnittdarstellung gemäß der Schnittlinie II-II,
- Fig. 3: den Drehknebel geschnitten in Seitenansicht und
- Fig. 4: den Lichtleiter in Seitenansicht.

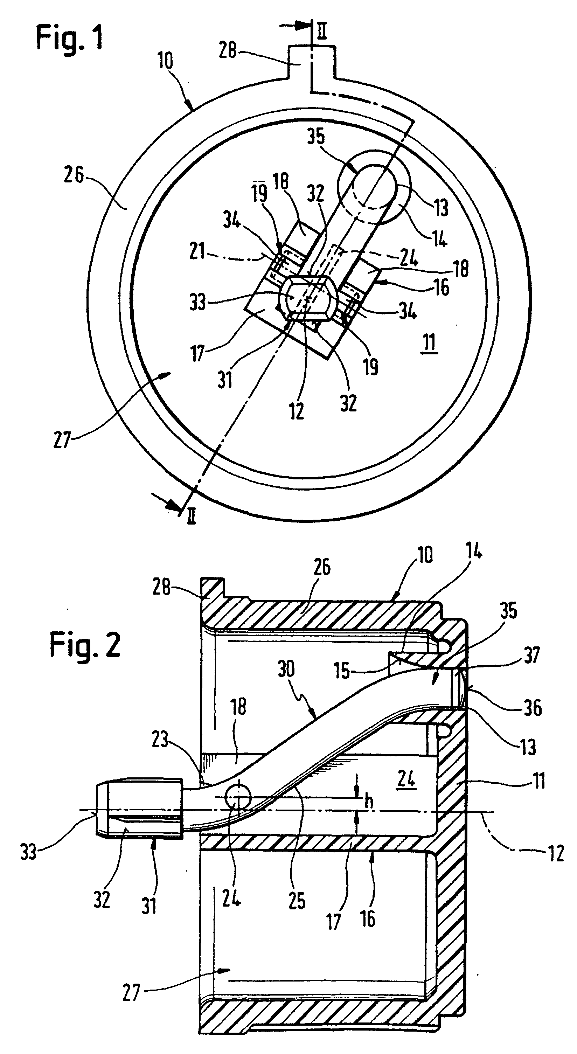

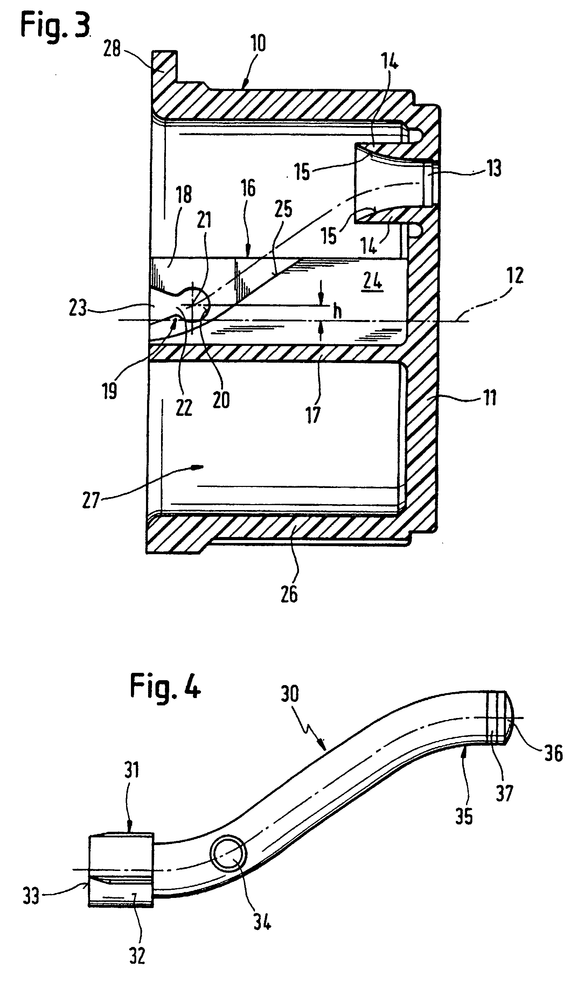

Gemäß Figur 1 ist ein napfähnlich geformter, einen kreisförmigen Grundriß aufweisender Drehknebel 10 mit einem seine Frontfläche bildenden Napfboden 11 gezeigt, durch dessen Kreiszentrum eine fiktive Drehachse 12 für den Drehknebel 10 verläuft. Der Napfboden 11 ist mit Autnahmen ausgestattet, welche zur Festsetzung eines weiter unten genauer erläuterten Lichtleiters dienen. Von diesen Aufnahmen ist eine als den Napfboden 11 durchsetzender, in radialem Abstand zur Drehachse 12 angeordneter Durchbruch 13 mit kreisförmigem Querschnitt ausgebildet, welchem eine konzentrisch zu seinem Mittelpunkt angeordnete, in Form eines geraden Kreishohlzylinders ausgebildete Zuführhilfe 14 vorgelagert ist, dessen freies Ende an seiner inneren Mantelfläche eine Zuführschräge 15 aufweist (siehe hierzu vor allem Figur 2 und Figur 3). Ferner ist am Napfboden 11, auf dessen der Sichtfläche gegenüberliegenden Innenseite, eine zweite Aufnahme in Form eines U-Profiles vorgesehen, welches mit einer seiner Stirnseiten einstückig an den Napfboden 11 mit angeformt ist und welches die Drehachse 12 zwischen seinen in parallelem Abstand zueinander angeordneten und durch seine Basis 17 miteinander verbundenen Schenkeln 18 aufnimmt. Die Schenkel 18 sind an ihrem freien, vom Napfboden 11 abgewandten Ende mit Ω-ähnlich ausgeführten Rastmitteln 19 ausgestattet, welche einander höhengleich gegenüberliegen. Die Rastmittel 19 weisen einen im wesentlichen kreisförmig ausgebildeten Halteabschnitt 20 auf, wobei die Mittelpunkte der Halteabschnitte 20 auf einer gemeinsamen Achse 21 liegen, welche zur Drehachse 12 über die Höhe h beabstandet ist (siehe hierzu Figur 1). Die Halteabschnitte 20 an den als Halteelemente ausgebildeten Schenkeln 18 besitzen zum freien Ende dieser hin eine Zugangsöffnung 22, welcher ein miteinander gegenüberliegenden Zuführschrägen ausgestatteter Zuführabschnitt 23 zum freien Ende der Schenkel 18 vorgelagert ist. Mittig zwischen den Schenkeln 18, parallel zu diesen verlaufend, ist eine an den Napfboden 11 einstückig mit angeformte Stützrippe 24 vorgesehen, welche an ihrem freien Ende eine als Abstützfläche 25 ausgebildete Schräge aufweist, welche von ihrem freien Ende zum Napfboden 11 hin ansteigt und im Bereich der Achse 21 unterhalb dieser verläuft.

Der Napfboden 11 ist an seinem Rand mit einer im wesentlichen senkrecht dazu angeordneten Napfwandung 26 ausgestattet, welche zusammen mit dem Napfboden 11 einen Napfraum 27 umgrenzt und welche an ihrer vom Napfraum 27 abgewandten äußeren Mantelfläche, am freien Ende der Napfwandung 26, mit einer Anschlagnase 28 zur Begrenzung des Drehweges für den Drehknebel 10 versehen ist.

Wie insbesondere aus Figur 2 hervorgeht, ist in den Napfraum 27 ein abgekröpft ausgebildeter, eingangs bereits erwähnter, mit kreisförmigem Querschnitt ausgestatteter Lichtleiter 30 einbringbar, welcher an einem seiner freien Enden mit einem verstärkt ausgeführten Endabschnitt 31 versehen ist. Dieser weist zwei in parallelem Abstand einander gegenüberliegende Abflachungen auf, welche als Eingriffsflächen 32 ausgebildet sind, welche mit einer Stellspindel eines nicht dargestellten Potentiometers formschlüssig in Eingriff bringbar sind. Der verstärkte Endabschnitt 31 ist an seinem freien Ende mit einer Lichteintrittsfläche 33 ausgestattet, über welche das beispielsweise von einer nicht dargestellten Leuchtdiode ausgesandte Licht in den Lichtleiter 30 einspeisbar ist. Im Nahbereich des verstärkten Endabschnittes 31, zurückgesetzt von diesem, weist der Lichtleiter 30 einander achsengleich gegenüberliegende, einen kreisförmigen Querschnitt aufweisende Rastzapfen 34 auf. Beabstandet zu den Rastzapfen 34 ist der Lichtleiter 30 am freien Ende seines zweiten, bezüglich dem Querschnitt des Lichtleiters 30 unveränderten Endabschnitt 35 mit einer ähnlich einer Linse geformten Lichtaustrittsfläche 36 versehen (siehe hierzu Figur 2 und Figur 4). Femer weist der Endabschnitt 35 einen um seinen Umfang angeordneten Haltebereich 37 auf.

Zur Befestigung des Lichtleiters 30 am Drehknebel 10 wird ersterer mit seinem unveränderten Endabschnitt 35 voraneilend in den Napfraum 27 eingebracht. Der Endabschnitt 35 wird in den Durchbruch 13 eingefügt und an Hand des Haltebereiches 37 in diesem gehaltert. Zu Beginn des Einfügevorgangs in den Durchbruch 13 sind die Rastzapfen 34 aufgrund ihres Abstandes zum Endabschnitt 35 bereits mit den an den Rastmitteln 19 vorgesehenen Zuführabschnitten 23 in Eingriff, welche die Rastzapfen 34 während des weiteren Einfügevorgangs des Endabschnitts 35 in den Durchbruch 13 (siehe Pfeilrichtung) über die Zugangsöffnung 22 den Halteabschnitten 20 zuführen, innerhalb welcher die Rastzapfen 34 in Art einer Rastverbindung lösbar gehalten sind. In seiner lagerichtigen Endposition liegt der Lichtleiter 30 mit seinem der Stützrippe 24 zugewandten Abschnitt seiner Mantelfläche an der Abstützfläche 25 positionsstabil an. In der verrasteten Fügeendposition des Lichtleiters 30 innerhalb des Napfraumes 27 ist der Lichtleiter 30 durch das Zusammenwirken seines Endabschnittes 35 mit dem Durchbruch 13 einerseits sowie durch das Verrasten der Rastzapfen 34 in den Halteabschnitten 20 andererseits ortsfest bezüglich des Drehknebels 10 festgesetzt, wobei im Befestigungszustand der Mittelpunkt der Lichteintrittsfläche 33 zumindest weitestgehend - so weit dies im Rahmen der üblichen Fertigungstoleranzen möglich ist - auf der Drehachse 12 des Drehknebels 10 angeordnet.

Sowohl der Drehknebel 10 als auch der Lichtleiter 30 sind kostengünstigerweise bevorzugt aus Kunststoff gefertigt.

## Patentansprüche

1. Drehknebel zur Betätigung des Stelltriebes eines Potentiometers oder dergleichen mit wenigstens einem in radialem Abstand zur Drehachse des Drehknebels an einer seiner Sichtflächen austretenden Beleuchtungsmittel, die als Lichtaustrittsfläche (36) eines Lichtleiters (30) ausgebildet sind, der wenigstens an einer Lichteintrittsfläche (33) von einer zumindest im wesentlichen auf der Drehachse (12) des Drehknebels (10) sitzenden Lichtquelle mit Licht gespeist ist, **dadurch gekennzeichnet, dass** der Lichtleiter (31) an seinem die Lichteintrittsfläche (33) aufweisenden Endabschnitt (31) Mitnahmemittei zur Betätigung des Stalltriebes des Potentiometers besitzt.

2. Drehknebel nach Anspruch 1, **dadurch gekennzeichnet, dass** der Endabschnitt (31) verstärkt ausgeführt ist.

3. Drehknebel nach Anspruch 1 oder 2, **dadurch gekennzeichnet, dass** die Mitnahmemittel am Endabschnitt (31) zur Betätigung des Potentiometers als parallel einander gegenüberliegende Eingriffsflächen (32) ausgebildet sind, welche form- und/oder kraftschlüssig in eine Aufnahmeöffnung des Stelltriebes des Potentiometers einzugreifen vermögen.

4. Drehknebel nach einem der Ansprüche 1 bis 3, **dadurch gekennzeichnet, dass** der verstärkte Endabschnitt (31) an seinem freien Ende mit einer Lichteintrittsfläche (33) ausgestattet ist.

5. Drehknebel nach einem der Ansprüche 1 - 4, **dadurch gekennzeichnet, dass** im Nahbereich der Mitnahmemittel am Lichtleiter (30) senkrecht zur Drehachse (12) des Drehknebels (10) angeordnete Rastzapfen (34) vorgesehen sind, die in Ω-ähnlich ausgeführte, Rastmittel (19) einzurasten vermögen, die an zwei im Abstand zueinander angeordnete, den Lichtleiter (30) zwischen sich aufnehmende Halteelemente (18) vorgesehen sind.

6. Drehknebel nach Anspruch 5, **dadurch gekennzeichnet, dass** die Halteelemente (18) eine Rastaufnahme (16) bilden, die im Nahbereich der Drehachse (12) des Drehknebels (10) sitzt.

7. Drehknebel nach Anspruch 5, **dadurch gekennzeichnet, dass** die Ω-ähnlich ausgeführten Rastmittel (19) entgegen der Fügerichtung des freien Endes (35) des Lichtleiters (30) in einen an den Lichtflächen des Drehknebels (10) angeordneten Durchbruch (13) mit einer Zuführöffnung (23) versehen sind.

8. Drehknebel nach einem der Ansprüche 1 bis 7, **dadurch gekennzeichnet, dass** der Drehknebel (10) in Art eines Napfes ausgebildet ist, dessen Napfboden (11) als Frontseite des Drehknebels (10) dient und konzentrisch um die Drehachse (12) des Drehknebels (10) den Durchbruch (13) für die Lichtaustrittsfläche (36) des Lichtleiters (30) aufweist.

9. Drehknebel nach Anspruch 8, **dadurch gekennzeichnet, dass** der Lichtleiter (30) zumindest weitestgehend vom Napfraum (27) des Napfes aufgenommen ist, wobei das der Napföffnung zugewandte freie Ende (31) des Lichtleiters (30) einen Überstand bezüglich der Napföffnung aufweist und mit den Mitnahmemitteln zur Betätigung des Stelltriebes des Potentiometers ausgestattet ist.

10. Drehknebel nach Anspruch 8 oder 9, **dadurch gekennzeichnet, dass** der Napf im Nahbereich seiner Napföffnung mit den die Rastzapfen (34) des Lichtleiters (30) aufnehmenden Rastmitteln (19) ausgestattet ist, dessen Zuführöffnungen (23) randoffen zur Napföffnung hin ausgebildet sind, wobei die Rastzapfen (34) am Lichtleiter (30) im Nahbereich seiner Mitnahmemittel angeordnet sind.

11. Drehknebel nach Anspruch 1, **dadurch gekennzeichnet, dass** die Lichtquelle als auf einer Leiterplatte elektrisch kontaktierte Leuchtdiode ausgebildet ist.

## Claims

1. Rotary knob for actuation of a setting drive of a potentiometer or the like, with at least one illuminating means which exits at a radial spacing from the axis of rotation of the rotary knob at one of its visible surfaces and which is formed as a light exit surface (36) of an optical conductor (30), which is supplied with light at at least one light entry surface (30) from a light source seated at least substantially on the axis (12) of rotation of the rotary knob (10), **characterised in that** the optical conductor (31) has at its end portion (31) having the light entry surface (33) entraining means for actuation of the setting drive of the potentiometer.

2. Rotary knob according to claim 1, **characterised in that** the end portion (31) is formed to be thickened.

3. Rotary knob according to claim 1 or 2, **characterised in that** the entraining means at the end portion (31) are, for actuation of the potentiometer, constructed as mutually parallel and opposite engagement surfaces (32) which are engageable in shape-locking and/or force-locking manner in a receiving opening of the setting drive.

4. Rotary knob according to one of claims 1 to 3, **characterised in that** the thickened portion (31) is equipped at its free end with a light entry surface (33).

5. Rotary knob according to one of claims 1 to 4, **characterised in that** detent pins (34) arranged in the vicinity of the entraining means at the optical conductor (30) and perpendicularly to the axis (12) of rotation of the rotary knob (10) are provided and are able to detent into detent means (19) which are constructed in Ω-like manner and which are provided at two retaining elements (18) arranged at a mutual spacing and receiving the optical conductor (30) therebetween.

6. Rotary knob according to claim 5, **characterised in that** the retaining elements (18) form a detent receptacle (16) which is seated in the vicinity of the axis (12) of rotation of the rotary knob (10).

7. Rotary knob according to claim 5, **characterised in that** the detent means (19) constructed in Ω-like manner are provided with an entry opening (23) opposite to the direction of fixing the free end (35) of the optical conductor (30) in a passage (13) arranged at the light surfaces of the rotary knob (10).

8. Rotary knob according to one of claims 1 to 7, **characterised in that** the rotary knob (10) is constructed in the form of a bowl, the bowl base (11) of which serves as the front side of the rotary knob (10) and has the passage (13) for the light exit surface (36) of the optical conductor (30) concentrically around the axis (12) of rotation of the rotary knob (10).

9. Rotary knob according to claim 8, **characterised in that** the optical conductor (30) is received at least substantially by the bowl chamber (27) of the bowl, wherein the free end (31), which faces the bowl opening, of the optical conductor (30) has an overhang with respect to the bowl opening and is equipped with the entraining means for actuation of the setting drive of the potentiometer.

10. Rotary knob according to claim 8 or 9, **characterised in that** the bowl is equipped in the vicinity of its bowl opening with detent means (19) which receive the detent pins (24) of the optical conductor (30) and the entry openings (23) of which are formed to open at the edge into the bowl opening, wherein the detent pins (34) at the optical conductor (30) are arranged in the vicinity of the entraining means thereof.

11. Rotary knob according to claim 1, **characterised in that** the light source is constructed as a luminescent diode electrically contacted on a circuitboard.

## Revendications

1. Bouton tournant pour l'actionnement de l'organe de réglage d'un potentiomètre ou d'autres dispositifs de ce genre comprenant au moins un moyen d'éclairage sortant sur l'une de ses surfaces visibles à une certaine distance, en direction radiale, de l'axe de rotation du bouton tournant et réalisé comme surface de lumière sortante (36) d'un guide de lumière (30) dans lequel est envoyée, au niveau d'une surface de lumière entrante (33), de la lumière au départ d'au moins une source lumineuse sensiblement située sur l'axe de rotation (12) du bouton tournant (10), **caractérisé en ce que** le guide de lumière (30) possède, sur son extrémité (31) présentant la surface de lumière entrante (33), des moyens d'entraînement en vue de l'actionnement de l'organe de réglage du potentiomètre.

2. Bouton tournant selon la revendication 1, **caractérisé en ce que** l'extrémité (31) est renforcée.

3. Bouton tournant selon la revendication 1 ou 2, **caractérisé en ce que** les moyens d'entraînement de l'extrémité (31) servant à actionner le potentiomètre sont réalisés comme surfaces de contact (32) parallèles se faisant face et pouvant entrer en contact, sous forme d'une fermeture géométrique et/ou par adhérence, avec une ouverture de l'organe de réglage du potentiomètre servant de logement.

4. Bouton tournant selon l'une des revendications 1 à 3, **caractérisé en ce que** le bout libre de l'extrémité renforcée (31) est muni d'une surface de lumière entrante (33).

5. Bouton tournant selon l'une des revendications 1 à 4, **caractérisé en ce qu**'à proximité des moyens d'entraînement sont prévus, sur le guide de lumière (30), des tourillons de blocage (34) placés verticalement par rapport à l'axe de rotation (12) du bouton tournant (10) et venant se loger dans des crans ressemblant à des Ω prévus sur deux éléments de retenue (18) situés à une certaine distance l'un de l'autre et accueillant le guide de lumière qui vient se placer entre les deux.

6. Bouton tournant selon la revendication 5, **caractérisé en ce que** les éléments de retenue (18) forment un logement en forme d'encoche (16) situé à proximité de l'axe de rotation (12) du bouton tournant (10).

7. Bouton tournant selon la revendication 5, **caractérisé en ce que** les crans (19) en forme de Ω sont munis d'une ouverture d'insertion (23) dans la direction opposée à celle dans laquelle l'extrémité libre (35) du guide de lumière (30) est introduite dans une ouverture (13) située sur les surfaces lumineuses du bouton tournant (10).

8. Bouton tournant selon l'une des revendications 1 à 7, **caractérisé en ce que** le bouton tournant (10) est réalisé à la façon d'un godet dont le fond (11) sert de face frontale du bouton tournant (10) et dans lequel l'ouverture (13) aménagée pour la surface de lumière sortante (36) du guide de lumière (30) se présente concentriquement autour de l'axe de rotation (12) du bouton tournant (10).

9. Bouton tournant selon la revendication 8, **caractérisé en ce que** le guide de lumière (30) est logé du moins en majeure partie dans l'espace (27) intérieur du godet, l'extrémité libre (31) du guide de lumière (30) tournée vers l'ouverture du godet ressortant par rapport à l'ouverture du godet et étant munie des moyens d'entraînement en vue de l'actionnement de l'organe de réglage du potentiomètre.

10. Bouton tournant selon la revendication 8 ou 9, **caractérisé en ce que** le godet est muni, à proximité de son ouverture, des crans (19) accueillant les tourillons de blocage (34) du guide de lumière (30) et dont les ouvertures d'insertion (23) sont réalisées de manière que leurs bords s'ouvrent en direction de l'ouverture du godet, les tourillons de blocage (34) étant situés sur le guide de lumière (30) à proximité de ses moyens d'entraînement.

11. Bouton tournant selon la revendication 1, **caractérisé en ce que** la source lumineuse est réalisée comme diode lumineuse connectée électriquement à une carte imprimée.
